# DEMANDE DE BREVET EUROPEEN

(11) **EP 4 344 054 A1**
(43) Date de publication de la demande: **27.03.2024**
(21) Numéro de dépôt: 23198909.6
(22) Date de dépôt: 21.09.2023
(51) Int. Cl.: H02S 20/32

(54) **DISPOSITIF PHOTOVOLTAÏQUE ET PROCÉDÉ DE PRODUCTION ÉNERGÉTIQUE PHOTOVOLTAÏQUE**

(30) Priorité: 23.09.2022 FR 2209648
(71) Demandeur: Commissariat à l'énergie atomique et aux énergies alternatives, 75015 Paris (FR)
(72) Inventeur: ASSOA, Ya-Brigitte, 38054 Grenoble cedex 09 (FR)
(74) Mandataire: Hautier IP

(57) **Abrégé**

Dispositif photovoltaïque, comprenant une structure porteuse (2), au moins un module photovoltaïque (3) monté sur la structure porteuse (2), et au moins trois pieds (4 à 7) configurés pour supporter la structure porteuse (2) parmi lesquels au moins deux pieds (4 à 7) sont allongeables pour permettre une rotation de la structure porteuse (2) autour d'au moins un premier axe de rotation (A), le dispositif comprenant au moins trois liaisons rotules supérieures (10 à 13) et au moins deux liaisons rotules inférieures (30 à 33) afin de permettre une rotation de la structure porteuse (2) autour d'un deuxième axe de rotation (B) perpendiculaire audit au moins un premier axe de rotation (A).

## Description

### DOMAINE TECHNIQUE

La présente invention concerne la production énergétique photovoltaïque, en particulier la production énergétique à partir de modules photovoltaïques.

### ETAT DE LA TECHNIQUE

Actuellement, on utilise des modules photovoltaïques pour convertir l'énergie solaire en énergie électrique. La production électrique est en général limitée par l'échauffement des modules photovoltaïques et leur disposition, c'est-à-dire leur orientation, ou inclinaison. Une solution souvent envisagée est le suivi de la course du soleil afin de réduire l'angle d'incidence de l'ensoleillement reçu par les modules tout au long de la journée. Dans des applications telles que l'agrivoltaïque (ou agriphotovoltaïque ou agrovoltaïque), la disposition des modules photovoltaïques doit être adaptée aux besoins et types de plantes du site ou du bâtiment, par exemple des toitures végétalisées. On entend par agrivoltaïsme, la production d'électricité grâce à des modules photovoltaïques disposés au moins une partie du temps au-dessus de cultures.

On peut citer, par exemple, le document WO2010128252, qui divulgue une toiture végétalisée, comprenant au-dessus du substrat et des plantes poussant sur le substrat, un ensemble de panneaux photovoltaïques fixes. Mais les modules photovoltaïques sont fixés au sol et leur orientation est constante quelle que soit l'incidence du soleil au cours de la journée, ce qui ne permet pas d'optimiser la production d'électricité.

Certains modules photovoltaïques sont équipés d'un système de suivi, appelé « tracking system » en langue anglaise, pour modifier l'orientation des modules afin de suivre la course du soleil.

On peut citer, par exemple, les documents FR2889787, WO2021/205114, CN113381676 et WO201147828 qui divulguent des modules photovoltaïques montés à pivotement autour d'un axe de pivotement. Les modules sont montés à pivotement sur un support fixé au sol.

Le document FR 3077463, divulgue un système agrivoltaïque comportant une structure porteuse et des rangées de capteurs photovoltaïques s'étendant selon respectivement des axes principaux et montés mobiles en translation selon deux axes, vertical et horizontal, perpendiculaires aux axes principaux. Les capteurs sont également mobiles en rotation autour de leurs axes principaux respectifs. Mais un tel système ne permet pas de suivre avec précision la course du soleil.

On peut également citer le document WO2011/123156, qui divulgue des panneaux photovoltaïques mobiles selon un axe de rotation principal, montés sur un cadre mobile en rotation autour d'un axe de rotation secondaire perpendiculaire à l'axe de rotation principal. Mais lorsqu'on incline les panneaux, pour suivre la course du soleil, il apparaît un ombrage des panneaux entre eux.

On peut aussi citer le document US20210211091, qui divulgue un dispositif de réseau de panneaux photovoltaïques, comprenant une plate-forme plane pouvant être translatée horizontalement, et un ensemble de panneaux photovoltaïques montés sur la plate-forme. Le dispositif comprend quatre piliers de fondation, quatre colonnes articulées en pivot sur les piliers et la plate-forme, et deux piliers télescopiques ayant une première extrémité montée à pivotement sur une colonne et une deuxième extrémité montée à pivotement sur la plate-forme, afin de translater la plate-forme. Chaque panneau est mobile en rotation autour d'un axe perpendiculaire à l'axe de translation de la plate-forme. Mais ce système ne permet pas d'éviter l'ombrage des panneaux entre eux.

Un objet consiste à fournir des moyens pour améliorer le suivi de la course du soleil, afin d'améliorer la production d'énergie photovoltaïque.

Un autre objet consiste à fournir des moyens pour modifier l'ombrage sous les modules photovoltaïques

### RESUME

Selon un aspect, il est proposé un dispositif photovoltaïque, comprenant une structure porteuse, au moins un module photovoltaïque monté sur la structure porteuse, et au moins trois pieds configurés pour supporter la structure porteuse parmi lesquels au moins deux pieds sont allongeables pour permettre une rotation de la structure porteuse autour d'au moins un premier axe de rotation.

Le dispositif comprend au moins trois liaisons rotules supérieures reliant respectivement des premières extrémités desdits au moins trois pieds avec la structure porteuse, et au moins deux liaisons rotules inférieures reliant des deuxièmes extrémités desdits au moins deux pieds allongeables avec respectivement au moins deux supports du dispositif destinés à être en contact avec le sol, afin de permettre une rotation de la structure porteuse autour d'un deuxième axe de rotation perpendiculaire audit au moins un premier axe de rotation.

Ainsi on fournit un dispositif qui permet de modifier l'orientation des modules photovoltaïques pour suivre la course du soleil tout en permettant de modifier l'incidence de l'ensoleillement reçu par les modules afin de limiter leur échauffement. Avantageusement, un tel dispositif permet d'optimiser l'énergie produite par les modules photovoltaïques tout en permettant de modifier l'ombrage sous les modules pour des plantes.

Selon un autre aspect, il est proposé une centrale photovoltaïque comprenant une pluralité de dispositifs photovoltaïques tels que définis ci-avant.

Selon un autre aspect, il est proposé un procédé de production énergétique photovoltaïque utilisant un dispositif photovoltaïque tel que défini ci-avant, comprenant un premier déplacement de la structure porteuse en rotation autour d'au moins un premier axe de rotation.

Le procédé comporte un deuxième déplacement de la structure porteuse en rotation autour du deuxième axe de rotation perpendiculaire audit au moins un premier axe de rotation.

Selon un autre aspect, il est proposé un produit programme d'ordinateur comprenant des instructions qui, lorsqu'elles sont exécutées par une unité de commande électronique, permettent à l'unité de commande électronique d'effectuer les étapes du procédé tel que défini ci-avant.

### BREVE DESCRIPTION DES FIGURES

Les buts, objets, ainsi que les caractéristiques et avantages de l'invention ressortiront mieux de la description détaillée de modes de réalisation de cette dernière, illustrés par les dessins d'accompagnement suivants dans lesquels :
la figure 1, illustre de façon schématique en perspective un mode de réalisation d'un dispositif photovoltaïque selon l'invention ;
la figure 2, illustre de façon schématique en perspective une vue de côté du dispositif photovoltaïque illustré à la figure 1 ;
la figure 3, illustre de façon schématique en perspective un autre mode de réalisation d'un dispositif photovoltaïque ;
la figure 4, illustre de façon schématique en perspective une vue de côté du dispositif photovoltaïque illustré à la figure 3;
la figure 5, illustre de façon schématique en perspective une vue arrière du dispositif photovoltaïque illustré à la figure 3;
la figure 6, illustre de façon schématique en perspective un autre mode de réalisation d'un dispositif photovoltaïque ;
les figures 7 et 8, illustrent de façon schématique en perspective des vues de côté d'un autre mode de réalisation d'un dispositif photovoltaïque ;
les figures 9 à 11, illustrent de façon schématique en perspective des vues de côté d'un autre mode de réalisation d'un dispositif photovoltaïque ;
la figure 12, illustre de façon schématique en perspective une vue arrière du dispositif photovoltaïque illustré aux figures 9 à 11 ; et
la figure 13, illustre de façon schématique les principales étapes d'un mode de mise en oeuvre d'un procédé de production énergétique photovoltaïque.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation et de mise en oeuvre de l'invention, sont énoncées ci-après des caractéristiques optionnelles qui peuvent éventuellement être utilisées en association ou alternativement.
- Selon un exemple, le dispositif comprend au moins trois pieds allongeables et au moins trois liaisons rotules inférieures reliant les deuxièmes extrémités desdits au moins trois pieds avec respectivement au moins trois supports du dispositif destinés à être en contact avec le sol, de façon à permettre une rotation de la structure porteuse autour d'un troisième axe de rotation perpendiculaire au deuxième axe de rotation. Grâce à un minimum de pieds allongeables, on peut déplacer la structure porteuse selon trois axes de rotation distincts pour une meilleure précision du positionnement de la structure porteuse.
- Selon un exemple, le dispositif comprend quatre pieds allongeables, quatre liaisons rotules supérieures reliant respectivement les premières extrémités des quatre pieds allongeables avec la structure porteuse, et quatre liaisons rotules inférieures reliant les deuxièmes extrémités des quatre pieds allongeables avec respectivement quatre supports du dispositif destinés à être en contact avec le sol, de façon à permettre des rotations de la structure porteuse autour de huit axes de rotation. Ainsi on fournit un dispositif ayant huit axes de rotation pour modifier l'orientation des modules photovoltaïques.
- Selon un exemple, au moins deux liaisons rotules supérieures sont montées mobiles en translation sur la structure porteuse selon respectivement au moins deux axes de coulissement.
- Selon un exemple, deux premières liaisons rotules supérieures sont montées mobiles en translation sur la structure porteuse selon respectivement deux premiers axes de coulissement, et deux deuxièmes liaisons rotules supérieures sont montées mobiles en translation sur la structure porteuse selon respectivement deux deuxièmes axes de coulissement, les premiers et deuxièmes axes de coulissement étant parallèles entre eux.
- Selon un exemple chaque axe de coulissement s'étend perpendiculairement à un côté de la structure porteuse.
- Selon un exemple, au moins deux liaisons rotules supérieures comportent respectivement au moins deux parties montées mobiles en translation au sein de respectivement au moins deux rainures prévues dans la structure porteuse, lesdites au moins deux rainures s'étendant perpendiculairement à un côté de la structure porteuse. On peut ainsi permettre un déplacement de deux liaisons rotules supérieures perpendiculairement à un côté de la structure pour faciliter une rotation de la structure porteuse par rapport à un axe de rotation s'étendant parallèlement au côté de la structure porteuse.
- Selon un exemple, deux premières liaisons rotules supérieures comportent respectivement deux parties montées mobiles en translation au sein de respectivement deux premières rainures prévues au niveau d'un premier côté de la structure porteuse, et deux deuxièmes liaisons rotules supérieures comportent respectivement deux parties montées mobiles en translation au sein de respectivement deux deuxièmes rainures prévues au niveau d'un deuxième côté de la structure porteuse opposé au premier côté, les premières et deuxièmes rainures s'étendant perpendiculairement aux premier et deuxième côtés. Ainsi, on facilite les rotations de la structure porteuse autour d'axes parallèles à un côté de la structure porteuse.
- Selon un exemple, au moins une rainure est une ouverture oblongue.
- Selon un exemple, le dispositif comprend au moins deux actionneurs configurés pour commander un allongement desdits au moins deux pieds allongeables. On peut ainsi limiter le nombre d'actionneurs pour modifier l'orientation des modules photovoltaïques.
- Selon un exemple, le dispositif comprend plusieurs modules photovoltaïques montés fixes sur la structure porteuse.
- Selon un exemple, le dispositif comprend au moins un capteur pour mesurer au moins un paramètre, ledit au moins un paramètre étant pris parmi un paramètre relatif à un ensoleillement dudit au moins un module photovoltaïque et un paramètre relatif à une production énergétique photovoltaïque dudit au moins un module photovoltaïque, et une unité de commande électronique configurée pour commander l'allongement desdits au moins deux pieds allongeables afin de déplacer la structure porteuse en fonction d'une mesure dudit au moins un paramètre.
- Selon un exemple, le dispositif comprend des végétaux plantés dans une partie du sol, la partie du sol étant située au-dessous de la structure porteuse, ledit au moins un paramètre étant pris parmi un paramètre relatif à une humidité de la partie du sol.
- Selon un exemple, le dispositif comprend des végétaux plantés dans un bac monté mobile sur une partie du sol, la partie du sol étant située au-dessous de la structure porteuse, ledit au moins un paramètre étant pris parmi : un paramètre relatif à une humidité présente dans le bac, et l'unité de commande électronique étant en outre configurée pour commander un déplacement du bac, afin de déplacer le bac en fonction d'une mesure dudit au moins un paramètre.
- Selon un exemple, le procédé comprend une mesure d'au moins un paramètre, ledit au moins un paramètre étant pris parmi un paramètre relatif à un ensoleillement dudit au moins un module photovoltaïque et un paramètre relatif à une production énergétique photovoltaïque dudit au moins un module photovoltaïque, et au moins l'un des déplacements de la structure porteuse en fonction de la mesure dudit au moins un paramètre.
- Selon un exemple, le procédé comprend une détermination d'une position de la structure porteuse à atteindre, une comparaison dudit au moins un paramètre mesuré avec un seuil de contrôle et au moins l'un des déplacements de la structure porteuse pour positionner la structure porteuse dans la position à atteindre lorsque le paramètre mesuré est strictement supérieur au seuil de contrôle.
- Selon un exemple, le procédé comprend une plantation de végétaux dans une partie du sol, la partie du sol étant située au-dessous de la structure porteuse, ledit au moins un paramètre étant pris parmi un paramètre relatif à une humidité de la partie du sol.
- Selon un exemple, le procédé comprend une plantation de végétaux dans un bac monté mobile sur une partie du sol, la partie du sol étant située au-dessous de la structure porteuse, ledit au moins un paramètre étant pris parmi un paramètre relatif à une humidité présente dans le bac, et au moins un déplacement du bac en fonction de la mesure dudit au moins un paramètre.

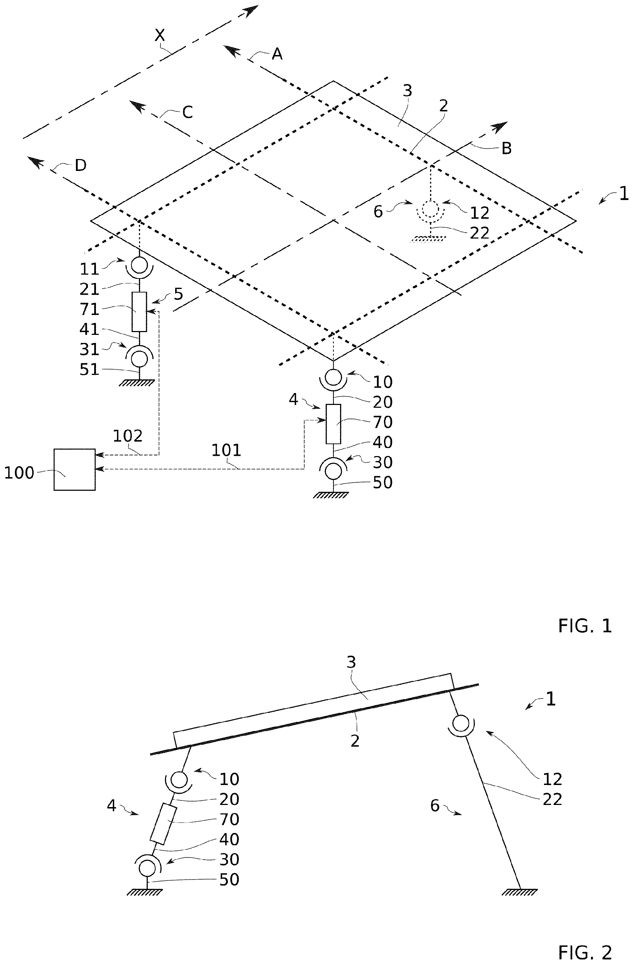

Sur les figures 1 à 12, on a représenté un dispositif photovoltaïque 1, comprenant une structure porteuse 2 et au moins un module photovoltaïque 3 monté sur la structure porteuse 2. Un module photovoltaïque 3 est configuré pour transformer l'énergie solaire en énergie électrique. Le dispositif peut comprendre plusieurs modules photovoltaïques 3, de préférence un unique module photovoltaïque 3.

De manière générale, chaque module 3 est monté sur la structure porteuse 2. Par exemple les modules 3 sont montés fixes sur la structure porteuse 2. Dans ce cas, les modules 3 sont immobiles par rapport à la structure porteuse 2. En variante, les modules 3 peuvent être montés à pivotement sur la structure porteuse 2.

La structure porteuse 2 peut être un cadre, c'est-à-dire une structure parallélépipédique. Dans ce cas, la structure porteuse 2 comprend quatre côtés 60 à 63. Par exemple, la structure porteuse 2 comprend quatre côtés parallèles deux à deux. Les quatre côtés 60 à 63 peuvent être égaux. Par exemple le cadre peut être en profilé acier.

Le dispositif 1 comprend, en outre, au moins trois pieds 4 à 7 configurés pour supporter la structure porteuse 2. Les pieds 4 à 7 sont configurés pour relier la structure porteuse 2 au sol. En particulier, au moins deux pieds 4 à 7 sont allongeables pour permettre une rotation de la structure porteuse 2 autour d'au moins un premier axe de rotation A. Par exemple, un pied allongeable peut être un vérin ou un pied télescopique. Un vérin peut être pneumatique, hydraulique et de préférence électrique. Un vérin comprend une tige rétractable au sein d'un cylindre et qui peut être déployée à l'extérieur du cylindre. Un pied télescopique comporte plusieurs éléments tubulaires qui se rétractent les uns dans les autres et peuvent être déployés pour former un pied en forme de tige. De manière générale, un pied allongeable 4 à 7 est configuré pour s'allonger et se raccourcir afin de modifier l'orientation de la structure porteuse 2.

Plus particulièrement, le dispositif 1 comprend au moins trois liaisons rotules supérieures 10 à 13 et au moins deux liaisons rotules inférieures 30 à 33, afin de permettre une rotation de la structure porteuse 2 autour d'un deuxième axe de rotation B perpendiculaire au premier axe de rotation A. Ainsi on peut animer la structure porteuse 2 en rotation autour d'au moins deux axes A, B perpendiculaires entre eux. On améliore ainsi les possibilités d'orientation du module photovoltaïque 3 pour un meilleur suivi de la course du soleil. Par ailleurs, lorsque le dispositif comprend plusieurs modules photovoltaïques 3 montés fixes sur la structure porteuse 2, on évite ainsi un ombrage des modules 3 entre eux.

Une liaison rotule supérieure 10 à 13 relie une première extrémité 20 à 23 d'un pied 4 à 7 avec la structure porteuse 2.

Une liaison rotule inférieure 30 à 33 relie une deuxième extrémité 40 à 43 d'un pied allongeable 4 à 7 avec un support 50 à 53 du dispositif 1.

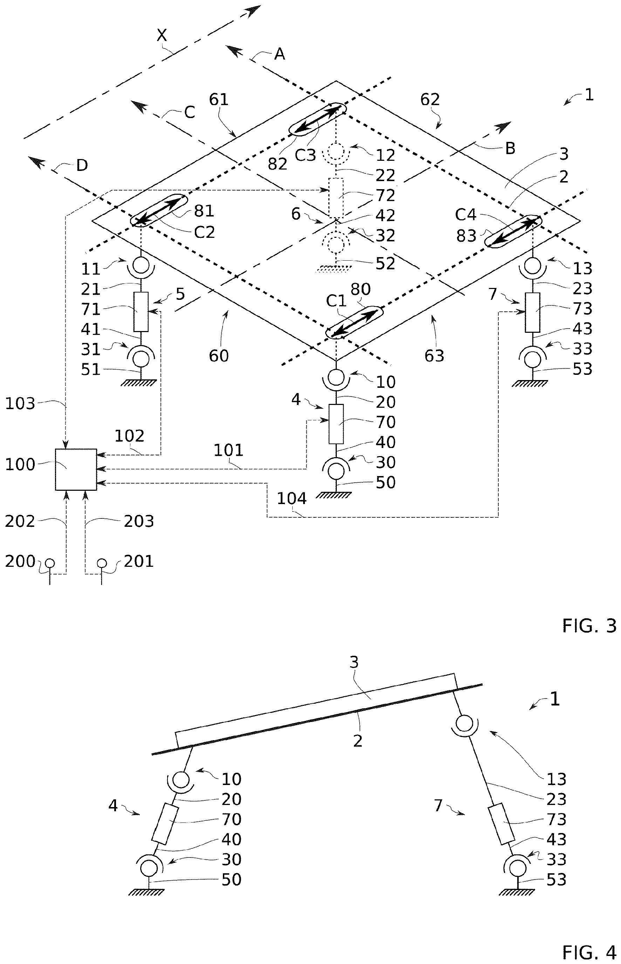

De manière générale, une liaison rotule 10 à 13 et 30 à 33 est une articulation à pivotement et à rotation reliant deux pièces destinées à être déplacées en pivotement et en rotation l'une par rapport à l'autre. Une liaison rotule comporte un siège en partie au moins sphérique et un pivot muni d'une tige fixée à une tête en partie sphérique, la tête étant logée en rotation et en pivotement dans le siège. Par exemple, comme illustré aux figures 1 et 3, une liaison rotule supérieure 10 à 13 comporte un pivot dont la tige est reliée à la structure porteuse 2 et le siège est relié à une première extrémité 20 à 23 d'un pied 4 à 7. En variante, une liaison rotule supérieure 10 à 13 peut comporter un pivot dont la tige est reliée à une première extrémité 20 à 23 d'un pied 4 à 7 et le siège est relié à la structure porteuse 2.

Selon un autre exemple, comme illustré aux figures 1 et 3, une liaison rotule inférieure 30 à 33 comporte un pivot dont la tige est reliée à un support 50 à 53 et le siège est relié à la deuxième extrémité 40 à 43 d'un pied 4 à 7. En variante, une liaison rotule inférieure 30 à 33 peut comporter un pivot dont la tige est reliée à la deuxième extrémité 40 à 43 d'un pied 4 à 7 et le siège est relié au support 50 à 53.

Un support 50 à 53 est destiné à être en contact avec le sol. Par exemple, un support 50 à 53 peut être fixé au sol. Un support 50 à 53 peut être en acier.

Sur la figure 1, on a représenté un mode de réalisation dans lequel, le dispositif 1 comprend trois liaisons rotules supérieures 10 à 12 reliant respectivement trois premières extrémités 20 à 22 de trois pieds 4 à 6 avec la structure porteuse 2. Le dispositif 1 comporte en outre deux liaisons rotules inférieures 30 à 31 reliant deux deuxièmes extrémités 40 à 41 de deux pieds allongeables 4 à 5 avec respectivement deux supports 50 à 51 du dispositif 1.

En variante, le dispositif 1 peut comprendre trois pieds allongeables 4 à 6, trois liaisons rotules inférieures 30 à 32 reliant trois deuxièmes extrémités 40 à 42 des trois pieds 4 à 6 avec respectivement trois supports 50 à 52 du dispositif 1. Selon cette variante, le dispositif 1 permet une rotation de la structure porteuse 2 autour d'un troisième axe de rotation C perpendiculaire au deuxième axe de rotation B.

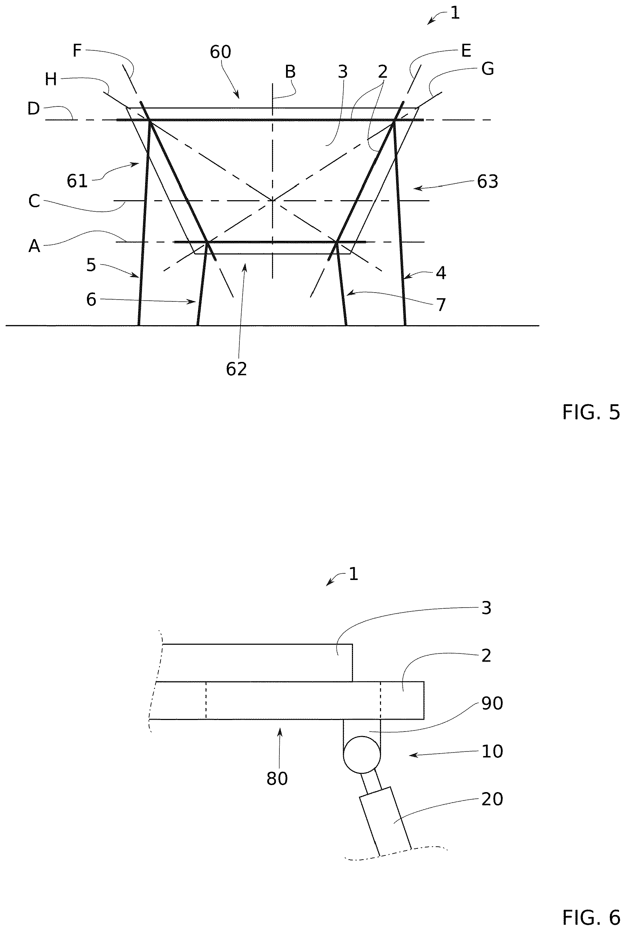

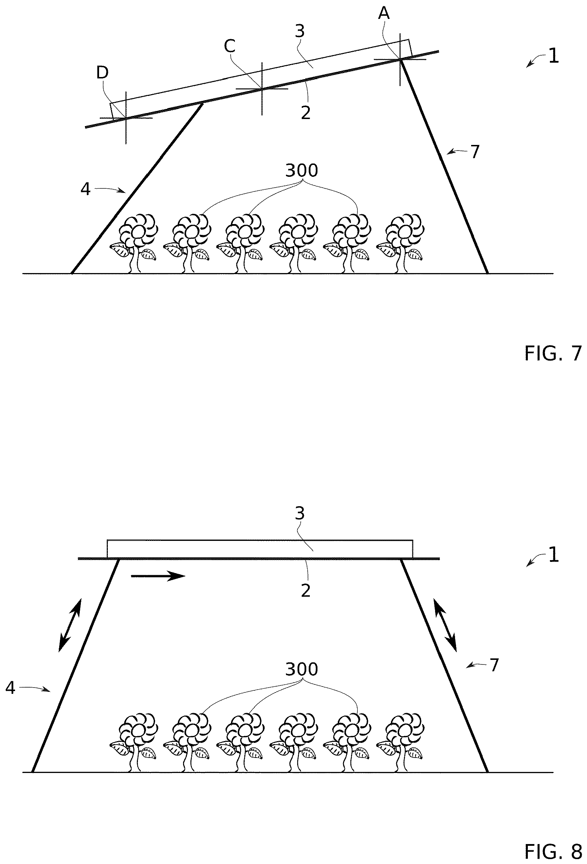

Selon un autre mode de réalisation, illustré aux figures 3 à 12, le dispositif 1 comprend quatre pieds allongeables 4 à 7, quatre liaisons rotules supérieures 10 à 13 reliant respectivement les premières extrémités 20 à 23 des quatre pieds allongeables 4 à 7 avec la structure porteuse 2. Le dispositif 1 comprend en outre, quatre liaisons rotules inférieures 30 à 33 reliant les deuxièmes extrémités 40 à 43 des quatre pieds allongeables 4 à 7 avec respectivement quatre supports 50 à 53 du dispositif 1. Selon ce mode de réalisation, le dispositif 1 permet huit rotations de la structure porteuse 2 autour de respectivement huit axes de rotation distincts A à H. Plus particulièrement, les huit axes de rotation A à H sont représentés sur la figure 5. La structure porteuse 2 comporte quatre axes de rotation D, F, A et E s'étendant respectivement le long des quatre côtés 60 à 63 de la structure porteuse 2. En outre, la structure porteuse 2 comporte deux axes de rotations B et C, perpendiculaires entre eux, et s'étendant respectivement le long des médianes de la structure porteuse 2. La structure porteuse comporte également deux axes de rotation G, H s'étendant respectivement le long des diagonales de la structure porteuse 2. Sur la figure 7, on a représenté un exemple de rotation de la structure porteuse 2. Dans l'exemple, deux premiers pieds allongeables 4, 5 se raccourcissent et les deux autres pieds allongeables 6, 7 s'allongent. Ainsi, la structure porteuse 2 a effectué une rotation par rapport aux axes de rotation A, C et D. Selon un autre exemple illustré à la figure 8, les deux premiers pieds allongeables 4, 5 s'allongent, d'une même longueur que celles des deux autres pieds allongeables 6, 7. Ainsi, la structure porteuse 2 peut être placée à l'horizontale.

A l'aide de huit axes de rotations, on peut modifier l'orientation du module 3 et améliorer la précision du suivi de la course du soleil. Le dispositif 1 permet d'optimiser la captation d'énergie solaire tout au long de la journée et éventuellement d'éviter l'ombrage des modules photovoltaïques 3 entre eux et l'ombrage créé par des éléments environnant, tels que des plantes, des constructions...

En modifiant la longueur des pieds allongeables, on peut animer la structure porteuse 2 en rotation selon l'un des axes de rotation A à H, et ainsi modifier l'orientation du module photovoltaïque 3.

La structure porteuse se comporte comme un système de suivi à plusieurs axes A à H.

Avantageusement, au moins deux liaisons rotules supérieures 10 à 13 sont montées mobiles en translation sur la structure porteuse 2 selon respectivement au moins deux axes de coulissement C1 à C4. Par exemple, deux premières liaisons rotules supérieures 10, 11 sont montées mobiles en translation sur la structure porteuse 2 selon respectivement deux premiers axes de coulissement C1, C2. Par ailleurs, deux deuxièmes liaisons rotules supérieures 12, 13 sont montées mobiles en translation sur la structure porteuse 2 selon respectivement deux deuxièmes axes de coulissement C3, C4. Les premiers et deuxièmes axes de coulissement C1 à C4 sont parallèles entre eux. Par exemple, chaque axe de coulissement C1 à C4 s'étend perpendiculairement à un côté 60 à 63 de la structure porteuse 2. Sur la figure 3, on a représenté un exemple dans lequel les axes de coulissement C1 à C4 sont perpendiculaires à deux côtés opposés 60, 62 de la structure porteuse 2. Les translations des liaisons rotules supérieures 10 à 13 permettent de faciliter les mouvements de rotation de la structure porteuse 2.

Par exemple, au moins deux liaisons rotules supérieures 10 à 13 comportent respectivement au moins deux parties 90 montées mobiles en translation au sein de respectivement au moins deux rainures 80 à 83 prévues dans la structure porteuse 2. Au moins deux rainures 80 à 83 s'étendent perpendiculairement à un côté 60 à 63 de la structure porteuse 2. Ainsi, on facilite une rotation de la structure porteuse 2 selon les axes de rotation A, D et C. Par exemple, une rainure 80 à 83 est une ouverture oblongue. L'ouverture oblongue peut être traversante ou borgne.

A titre d'exemple, on a représenté sur la figure 6, la partie mobile d'une liaison rotule supérieure 10. Une partie mobile 90 peut être un chariot monté mobile en translation sur un rail. Le rail permet de guider en translation le chariot. Le rail peut être logé au sein d'une rainure 80 à 83. Selon un autre exemple, le rail peut être monté sur la structure porteuse 2 et forme une rainure 80 à 83. Le chariot peut comprendre des roulements pour translater par roulement sur le rail. En variante, le chariot peut comprendre des glissières coopérant avec le rail pour translater par glissement sur le rail.

Avantageusement, deux premières liaisons rotules supérieures 10, 11 comportent respectivement deux parties montées mobiles en translation au sein de respectivement deux premières rainures prévues 80, 81 au niveau d'un premier côté 60 de la structure porteuse 2. En outre, deux deuxièmes liaisons rotules supérieures 12, 13 comportent respectivement deux parties montées mobiles en translation au sein de respectivement deux deuxièmes rainures 82, 83 prévues au niveau d'un deuxième côté 62 de la structure porteuse 2 opposé au premier côté 60. Par exemple, les premières et deuxièmes rainures 80 à 83 s'étendent perpendiculairement aux premier et deuxième côtés 60, 62. On peut ainsi faciliter les rotations de la structure porteuse 2 autour d'axes A, D et C parallèles à un côté de la structure porteuse 60, 62.

Selon un autre avantage, le dispositif 1 comprend au moins deux actionneurs 70 à 73 configurés pour commander un allongement d'au moins deux pieds allongeables 4 à 7. Par exemple, les pieds allongeables 4 à 7 sont des vérins et les actionneurs 70 à 73 sont les cylindres des vérins au sein desquels les tiges peuvent être allongées ou rétractées. A l'aide de deux actionneurs 70 à 73 on peut animer la structure porteuse 2 en rotation autour des premier et deuxième axes de rotation A, B. Le dispositif 1 peut également comprendre quatre actionneurs 70 à 73 pour commander respectivement un allongement de quatre pieds allongeables 4 à 7 pour permettre d'animer la structure porteuse 2 en rotation selon les huit axes de rotation A à H.

Par ailleurs, le dispositif 1 peut comprendre une unité de commande électronique 100 configurée pour commander l'allongement des pieds allongeables 4 à 7 afin de déplacer la structure porteuse 2. L'unité de commande électronique 100 permet de déplacer la structure porteuse 2 de manière automatisée. L'unité de commande électronique 100 peut être un microprocesseur ou un automate programmable. L'unité de commande électronique 100 est couplée, par quatre connexions 101 à 104, respectivement aux quatre actionneurs 70 à 73. L'unité de commande électronique 100 peut commander les actionneurs 70 à 73 afin de modifier la longueur des pieds allongeables 4 à 7, c'est-à-dire pour allonger, ou rétracter, les pieds allongeables 4 à 7. Les changements de longueur des pieds allongeables 4 à 7 permettent d'animer la structure porteuse 2 selon les différents axes de rotation A à H. On peut donc orienter la structure porteuse 2 dans différentes directions.

Avantageusement, le dispositif 1 peut comprendre au moins un capteur 200, 201 pour mesurer au moins un paramètre. Par exemple, un capteur 200, 201 peut être fixé sur la structure porteuse 2, ou intégré au sein du module 3. Un paramètre peut être pris parmi un paramètre relatif à un ensoleillement d'un module photovoltaïque 3 et un paramètre relatif à une production énergétique photovoltaïque du module photovoltaïque 3.

Par exemple, un paramètre relatif à un ensoleillement d'un module photovoltaïque 3 peut être un paramètre d'ensoleillement global Gl, mesuré à l'aide d'un pyranomètre ou d'une cellule photovoltaïque de référence du module 3 ; une température d'air ambiante, mesurée à l'aide d'un capteur de température ou d'un anémomètre sous abri météorologique ; une vitesse et une direction du vent, mesurées à l'aide d'un anémomètre. Un pyranomètre est un capteur de flux thermique utilisé pour la mesure d'une quantité d'énergie solaire. Un paramètre relatif à une production énergétique photovoltaïque du module photovoltaïque 3 peut être un paramètre relatif à une mesure électrique, par exemple un courant instantané Idc, de préférence en amont d'un onduleur, mesuré par un capteur de courant ; un paramètre relatif à une mesure thermique du module photovoltaïque 3, de préférence une mesure thermique de la cellule photovoltaïque la plus proche du centre du module photovoltaïque 3, mesurée à l'aide d'un thermocouple ou d'un capteur de température.

Les capteurs 200, 201 et les actionneurs 70 à 73 peuvent être alimentés en partie par les modules photovoltaïques 3. En outre, les capteurs 200, 201 peuvent être couplés à l'unité de commande électronique 100, par des connections 202, 203. L'unité de commande électronique 100 peut être configurée pour commander l'allongement des pieds allongeables 4 à 7 afin de déplacer la structure porteuse 2 en fonction d'une mesure d'au moins un paramètre. Un tel dispositif 1 est particulièrement adapté pour modifier l'orientation de la structure porteuse 2 afin que le module photovoltaïque 3 suive la course du soleil. Par ailleurs, on peut modifier l'orientation de la structure porteuse en fonction de paramètres météorologiques ou de température pour éviter une surchauffe du module photovoltaïque 3.

De façon générale, on peut fournir un procédé de production énergétique photovoltaïque utilisant le dispositif photovoltaïque 1 tel que défini ci-avant. Le procédé comprend un premier déplacement de la structure porteuse 2 en rotation autour d'au moins un premier axe de rotation A à H, et un deuxième déplacement de la structure porteuse 2 en rotation autour d'un deuxième axe de rotation A à H distinct du premier axe de rotation A à H, et en particulier perpendiculaire au premier axe de rotation A à H. Le procédé peut en outre comprendre une mesure d'au moins un paramètre, et au moins l'un des déplacements de la structure porteuse 2 en fonction de la mesure du paramètre.

Sur les figures 7 à 8, on a représenté une variante dans laquelle, le dispositif comprend des végétaux 300 plantés dans une partie du sol. Un tel dispositif est particulièrement adapté pour l'agrivoltaïsme ou pour des toitures végétalisées photovoltaïques. La partie du sol est située au-dessous de la structure porteuse 2. Le paramètre peut être pris parmi un paramètre relatif à une humidité de la partie du sol, mesurée à l'aide d'un capteur de quantité d'eau présente dans le sol. Le paramètre relatif à une humidité de la partie du sol peut être une quantité d'eau, un pourcentage d'eau présent dans la partie du sol. Par ailleurs l'unité de commande électronique 100 peut calculer des paramètres relatifs aux végétaux 300 à partir d'un type de végétaux, par exemple un paramètre relatif au besoin d'ensoleillement des végétaux 300, tel qu'une durée d'exposition des végétaux au soleil.

L'unité de commande électronique 100 peut également calculer un paramètre relatif à un ombrage sous le module 3. Par exemple, le paramètre relatif à un ombrage sous le module 3 peut être calculé à partir d'un rapport entre le paramètre d'ensoleillement global Gl et le courant instantané Idc.

L'unité de commande électronique 100 peut en outre commander l'allongement des pieds allongeables 4 à 7 en fonction d'un paramètre relatif aux végétaux 300 et/ou du paramètre relatif à un ombrage sous le module 3.

Ainsi, on peut modifier l'orientation du module photovoltaïque 3 de façon à modifier l'ombrage des végétaux 300 situés sous le module 3. Le dispositif 1 permet d'optimiser la croissance des végétaux 300.

Selon cette variante, le procédé peut comprendre au moins l'un des déplacements de la structure porteuse 2 en fonction de la mesure d'au moins un paramètre, et/ou du calcul d'un paramètre relatif aux végétaux 300, ou du paramètre relatif à un ombrage sous le module 3.

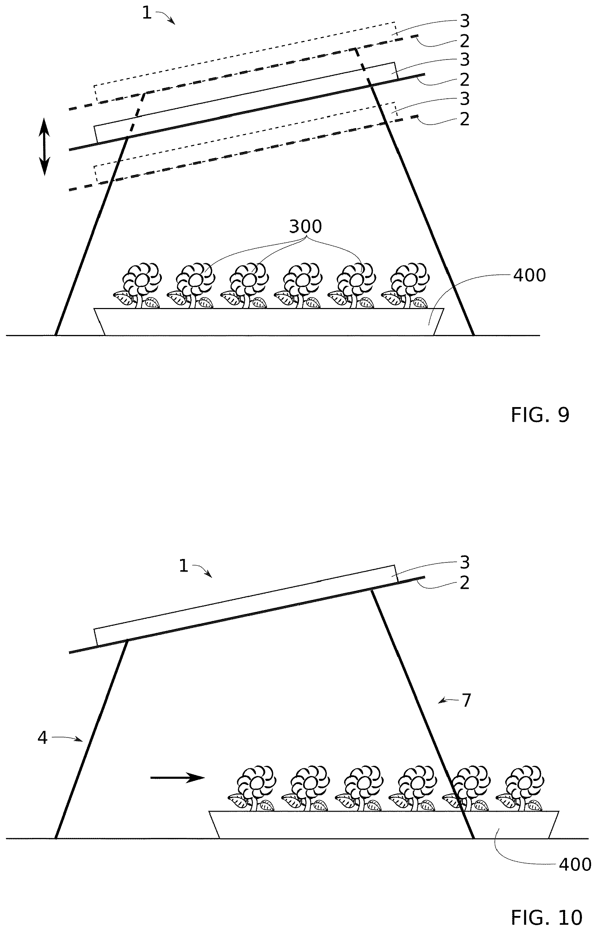

Sur les figures 9 à 12, on a représenté une autre variante dans laquelle, le dispositif 1 comprend des végétaux plantés dans un bac 400 monté mobile sur une partie du sol, la partie du sol étant située au-dessous de la structure porteuse 2. Le paramètre peut être pris parmi un paramètre relatif à une humidité présente dans le bac 400, mesuré à l'aide d'un capteur de quantité d'eau présente dans le bac 400.

L'unité de commande électronique 100 est en outre configurée pour commander un déplacement du bac, afin de déplacer le bac en fonction d'une mesure d'au moins un paramètre, et/ou du calcul d'un paramètre relatif aux végétaux 300, ou du paramètre relatif à un ombrage sous le module 3.

Avantageusement, on peut déplacer la structure porteuse 2, en translation verticale pour modifier l'ombrage sous le module 3, comme illustré sur la figure 9. On a représenté, à titre d'exemple, trois positions de la structure porteuse 2 respectivement selon trois hauteurs distinctes par rapport au sol. On peut en outre déplacer la structure porteuse 2 pour protéger les plantes de la pluie ou pour chauffer légèrement les plantes en cas de froid par échanges thermiques par rayonnement produit par le module photovoltaïque 3. Par exemple, on peut déplacer la structure porteuse 2 vers le haut, en allongeant les pieds allongeables 4 à 7, ou vers le bas en raccourcissant les pieds allongeables 4 à 7.

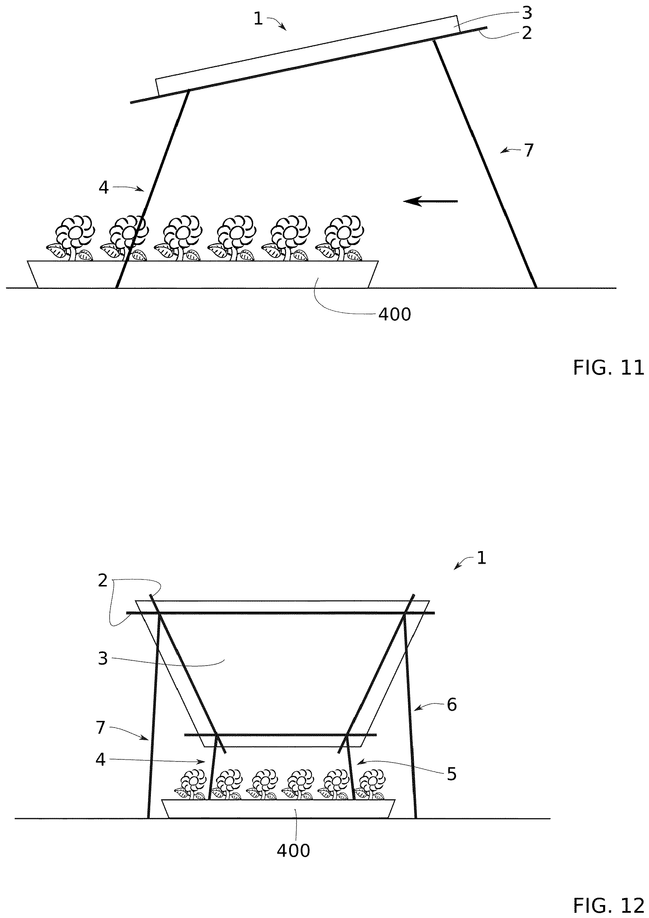

Sur la figure 12, on a représenté une vue arrière du dispositif 1 dans lequel le bac 400 est situé au-dessous de la structure porteuse 2, de sorte que le bac 400 est entièrement ombragé par le module 3.

Sur la figure 10, on a représenté un exemple dans lequel on déplace le bac 400 vers l'arrière du module 3, où peuvent être disposés des systèmes d'arrosage des végétaux 300. A l'inverse, sur la figure 11 on a représenté un exemple dans lequel on déplace le bac 400 en avant du module 3, pour les protéger d'un arrosage intempestif, ou pour placer les végétaux en pleine lumière.

L'unité de commande électronique 100 peut comprendre un programme d'ordinateur comprenant des instructions pour commander chacun des actionneurs 70 à 73 afin de pouvoir automatiser les déplacements de la structure porteuse 2. L'unité de commande électronique 100 comprend un processeur ou un microprocesseur pour exécuter les instructions du programme. L'unité de commande électronique 100 comprend également des moyens pour commander les actionneurs 70 à 73 en réponse à l'exécution des instructions du programme.

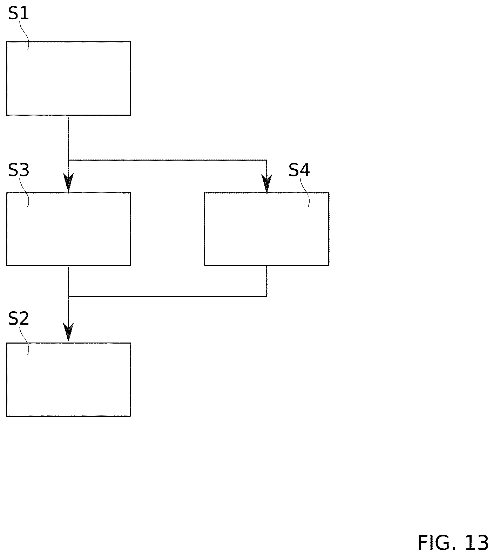

Sur la figure 13, on a représenté un mode de mise en oeuvre du procédé de production énergétique photovoltaïque. Par exemple, le procédé comprend une première étape S1 dans laquelle l'unité de commande électronique 100 détermine une position de la structure porteuse 2 à atteindre à partir d'au moins le premier déplacement et le deuxième déplacement. La position à atteindre peut correspondre à une position optimale dans laquelle la production énergétique photovoltaïque est maximum en fonction d'une position du soleil correspondante à une heure spécifique de la journée. L'heure spécifique peut être calculée par l'unité de commande électronique 100. Puis, le procédé comprend une deuxième étape S2 dans laquelle l'unité de commande électronique 100 commande les actionneurs 70 à 73 pour modifier la longueur des pieds allongeables 4 à 7 afin de positionner la structure porteuse 2 dans la position à atteindre. La deuxième étape S2 peut être effectuée à l'heure spécifique précitée, ou avant par anticipation, par exemple une heure avant l'heure spécifique. Par ailleurs, le procédé peut comprendre une étape intermédiaire S3, effectuée après la première étape S1 et avant la deuxième étape S2, comprenant une comparaison d'au moins un paramètre mesuré avec un seuil de contrôle et si le paramètre mesuré est strictement supérieur au seuil de contrôle, l'unité de commande électronique 100 calcule une nouvelle position de la structure porteuse 2 à atteindre. Par exemple, la deuxième étape S2 comprend une comparaison entre une mesure et une prédiction d'un paramètre relatif à une production énergétique photovoltaïque du module photovoltaïque 3. Si la comparaison est strictement supérieure à 5%, l'unité de commande électronique 100 calcule une nouvelle position à atteindre. La deuxième étape S2 peut comprendre une comparaison entre une mesure d'un paramètre relatif à un ombrage sous le module 3 et un seuil d'ombrage. La deuxième étape S2 peut comprendre une comparaison, dite thermique, entre une mesure d'un paramètre relatif à une mesure thermique du module photovoltaïque 3 et un seuil d'échauffement du module photovoltaïque 3. Avantageusement la comparaison thermique peut être effectuée pendant une durée déterminée, par exemple 30 minutes, au-delà de laquelle la nouvelle position à atteindre est effectivement calculée. Le procédé peut comprendre une étape de mise en protection S4, dans laquelle l'unité de commande électronique 100 effectue une comparaison entre la vitesse du vent mesurée et un seuil de vitesse pendant une durée spécifique, par exemple 10 minutes, et si la vitesse du vent mesurée est strictement supérieure au seuil de vitesse pendant une durée supérieure à la durée spécifique, l'unité de commande électronique 100 commande les actionneurs 70 à 73 pour modifier la longueur des pieds allongeables 4 à 7 afin de positionner la structure porteuse 2 dans une position de sécurité dans laquelle la structure porteuse 2 est à l'horizontal.

Plusieurs dispositifs photovoltaïques 1 peuvent être rassemblés pour former une centrale photovoltaïque. Les dispositifs peuvent être montées individuellement ou connectées en série ou en parallèle, à l'aide d'un branchement à une batterie ou à un réseau de distribution électrique par l'intermédiaire d'onduleurs ou de micro-onduleurs. Les onduleurs peuvent être fixés sur les supports 50 à 53 du dispositif 1.

Le dispositif et le procédé définis ci-avant permettent la gestion de la position non seulement pour le suivi de la course du soleil mais aussi pour limiter les ombrages entre modules photovoltaïques, dus aux plantes ou arbres environnants ou pour permettre l'entretien ou les activités sous les modules photovoltaïques, telles que des travaux, cultures, ou des passages d'animaux.

## Revendications

1. Dispositif photovoltaïque, comprenant une structure porteuse (2), au moins un module photovoltaïque (3) monté sur la structure porteuse (2), au moins trois pieds (4 à 7) configurés pour supporter la structure porteuse (2) parmi lesquels au moins deux pieds (4 à 7) sont allongeables pour permettre une rotation de la structure porteuse (2) autour d'au moins un premier axe de rotation (A), au moins trois liaisons rotules supérieures (10 à 13) reliant respectivement des premières extrémités (20 à 23) desdits au moins trois pieds (4 à 7) avec la structure porteuse (2), et au moins deux liaisons rotules inférieures (30 à 33) reliant des deuxièmes extrémités (40 à 43) desdits au moins deux pieds allongeables (4 à 7) avec respectivement au moins deux supports (50 à 53) du dispositif destinés à être en contact avec le sol, afin de permettre une rotation de la structure porteuse (2) autour d'un deuxième axe de rotation (B) perpendiculaire audit au moins un premier axe de rotation (A), **caractérisé en ce que** le dispositif comprend quatre pieds allongeables (4 à 7), quatre liaisons rotules supérieures (10 à 13) reliant respectivement les premières extrémités (20 à 23) des quatre pieds allongeables (4 à 7) avec la structure porteuse (2), et quatre liaisons rotules inférieures (30 à 33) reliant les deuxièmes extrémités (40 à 43) des quatre pieds allongeables (4 à 7) avec respectivement quatre supports (50 à 53) du dispositif destinés à être en contact avec le sol, de façon à permettre des rotations de la structure porteuse (2) autour de huit axes de rotation distincts (A à H), et **en ce qu'**au moins deux liaisons rotules supérieures (10 à 13) sont montées mobiles en translation sur la structure porteuse (2) selon respectivement au moins deux axes de coulissement.

2. Dispositif selon la revendication précédente, dans lequel deux premières liaisons rotules supérieures (10, 11) sont montées mobiles en translation sur la structure porteuse (2) selon respectivement deux premiers axes de coulissement, et deux deuxièmes liaisons rotules supérieures (12, 13) sont montées mobiles en translation sur la structure porteuse (2) selon respectivement deux deuxièmes axes de coulissement, les premiers et deuxièmes axes de coulissement étant parallèles entre eux.

3. Dispositif selon l'une quelconque des revendications 1 et 2, dans lequel chaque axe de coulissement s'étend perpendiculairement à un côté (60 à 63) de la structure porteuse (2).

4. Dispositif selon l'une quelconque des revendications 1 à 3, dans lequel au moins deux liaisons rotules supérieures (10 à 13) comportent respectivement au moins deux parties montées mobiles en translation au sein de respectivement au moins deux rainures (80 à 83) prévues dans la structure porteuse (2), lesdites au moins deux rainures (80 à 83) s'étendant perpendiculairement à un côté (60 à 63) de la structure porteuse (2).

5. Dispositif selon la revendication précédente, dans lequel deux premières liaisons rotules supérieures (10, 11) comportent respectivement deux parties montées mobiles en translation au sein de respectivement deux premières rainures prévues (80, 81) au niveau d'un premier côté (60) de la structure porteuse (2), et deux deuxièmes liaisons rotules supérieures (12, 13) comportent respectivement deux parties montées mobiles en translation au sein de respectivement deux deuxièmes rainures (82, 83) prévues au niveau d'un deuxième côté (62) de la structure porteuse (2) opposé au premier côté (60), les premières et deuxièmes rainures (80 à 83) s'étendant perpendiculairement aux premier et deuxième côtés (60, 62).

6. Dispositif selon l'une quelconque des revendications 4 et 5, dans lequel au moins une rainure (80 à 83) est une ouverture oblongue.

7. Dispositif selon l'une quelconque des revendications précédentes, comprenant au moins deux actionneurs (70 à 73) configurés pour commander un allongement desdits au moins deux pieds allongeables (4 à 7).

8. Dispositif selon l'une quelconque des revendications précédentes, comprenant plusieurs modules photovoltaïques (3) montés fixes sur la structure porteuse (2).

9. Centrale photovoltaïque comprenant une pluralité de dispositifs photovoltaïques selon l'une quelconque des revendications précédentes.

10. Procédé de production énergétique photovoltaïque utilisant un dispositif photovoltaïque selon l'une quelconque des revendications 1 à 8, comprenant un premier déplacement de la structure porteuse (2) en rotation autour d'au moins un premier axe de rotation (A), **caractérisé en ce que** le procédé comporte un deuxième déplacement de la structure porteuse (2) en rotation autour du deuxième axe de rotation (B) perpendiculaire audit au moins un premier axe de rotation (A).

11. Procédé selon la revendication précédente, comprenant une mesure d'au moins un paramètre, ledit au moins un paramètre étant pris parmi un paramètre relatif à un ensoleillement dudit au moins un module photovoltaïque (3) et un paramètre relatif à une production énergétique photovoltaïque dudit au moins un module photovoltaïque (3), et au moins l'un des déplacements de la structure porteuse (2) en fonction de la mesure dudit au moins un paramètre.

12. Procédé selon la revendication précédente, comprenant une détermination d'une position de la structure porteuse 2 à atteindre, une comparaison dudit au moins un paramètre mesuré avec un seuil de contrôle et au moins l'un des déplacements de la structure porteuse 2 pour positionner la structure porteuse 2 dans la position à atteindre lorsque le paramètre mesuré est strictement supérieur au seuil de contrôle.

13. Procédé selon la revendication précédente, comprenant une plantation de végétaux dans une partie du sol, la partie du sol étant située au-dessous de la structure porteuse (2), ledit au moins un paramètre étant pris parmi un paramètre relatif à une humidité de la partie du sol.

14. Procédé selon la revendication 11, comprenant une plantation de végétaux dans un bac monté mobile sur une partie du sol, la partie du sol étant située au-dessous de la structure porteuse (2), ledit au moins un paramètre étant pris parmi un paramètre relatif à une humidité présente dans le bac, et au moins un déplacement du bac en fonction de la mesure dudit au moins un paramètre.

15. Produit programme d'ordinateur comprenant des instructions qui, lorsqu'elles sont exécutées par une unité de commande électronique (100), permettent à l'unité de commande électronique (100) d'effectuer les étapes du procédé selon l'une quelconque des revendications 10 à 14.
